# DEMANDE DE BREVET EUROPEEN

(11) **EP 4 681 533 A1**
(43) Date de publication de la demande: **21.01.2026**
(21) Numéro de dépôt: 25187686.8
(22) Date de dépôt: 05.07.2025
(51) Int. Cl.: A01M 7/00

(54) **PROCÉDÉ DE GESTION D'UN RÉGIME DE VENTILATION POUR UN SYSTÈME DE PULVÉRISATION EN JET PORTÉ**

(30) Priorité: 16.07.2024 FR 2407805
(71) Demandeur: Exel Industries, 51200 Epernay (FR)
(72) Inventeur: BOUCQUEMONT, Thomas, 51130 Bergeres-Les-Vertus (FR)
(74) Mandataire: Bandpay & Greuter

(57) **Abrégé**

La présente invention vise un procédé pour délivrer un flux d'air pulsé (FAP) dans un système de pulvérisation (10) d'un produit à pulvériser (8) porté par un débit d'air à destination d'une végétation cible (TV), le système de pulvérisation étant embarqué à bord d'un engin agricole (9) et comprenant au moins un ventilateur (7) entrainé par un moteur de ventilateur (4), le procédé comprenant itérativement :
- une évaluation de la vitesse d'avance (VA) de l'engin agricole par rapport au sol,
- une détermination, en fonction de la vitesse d'avance, d'au moins un paramètre de commande de débit en relation avec le flux d'air pulsé à délivrer,
- le pilotage du moteur de ventilateur selon le paramètre de commande de débit,
et système de pulvérisation mettant en œuvre un tel procédé.

## Description

### DOMAINE TECHNIQUE

La présente invention concerne le domaine des systèmes de pulvérisation de produit qui sont utilisés dans les exploitations agricoles, notamment les exploitations viticoles ou arboricoles. Lesdits systèmes de pulvérisation sont utilisés pour appliquer des produits, tels que par exemple des produits phytosanitaires, sur une végétation cible, e.g. feuillage d'arbre, feuillage d'arbuste, feuillage de vigne, etc.

Lesdits systèmes de pulvérisation sont généralement associés à un engin agricole, que le système de pulvérisation soit porté ou traîné.

### ETAT DE LA TECHNIQUE

Dans ce domaine, il est connu d'associer un flux d'air pour accompagner la pulvérisation de produit, on parle alors de système de pulvérisation « en jet porté ». Par ailleurs, il est connu d'adapter la quantité de produit pulvérisé par le système de pulvérisation en fonction de la vitesse d'avance de l'engin agricole.

Toutefois, le flux d'air utilisé pour former le jet de produit porté est généré par un ventilateur commandé généralement en mode tout-ou-rien. Il s'ensuit que si la quantité de produit pulvérisé par le système de pulvérisation en fonction de la vitesse d'avance de l'engin agricole évolue au cours du temps selon une vitesse d'avance non constante, les conditions aérauliques et la proportion de produit pulvérisé dans le flux d'air portant ne sont pas constantes et cela conduit à des variations de projections du produit et une qualité de pulvérisation imparfaite. En d'autres termes, on constate des dispersions dans la délivrance et l'application du produit, conséquence de la vitesse de passage variable de l'engin agricole à l'endroit du traitement générant des conditions aérauliques variables.

Il demeure par conséquent un besoin d'améliorer la qualité et la répétabilité du process de pulvérisation du produit, afin de diminuer les dispersions dans la délivrance et l'application du produit sur la végétation.

### PRESENTATION DE L'INVENTION

Dans ce contexte, la présente invention a pour objet un procédé pour délivrer un flux d'air pulsé dans un système de pulvérisation d'un produit à pulvériser porté par un débit d'air à destination d'une végétation cible, le système de pulvérisation étant embarqué à bord d'un engin agricole et comprenant au moins un ventilateur entrainé par un moteur de ventilateur, le procédé comprenant itérativement :
- une évaluation de la vitesse d'avance de l'engin agricole par rapport au sol,
- une détermination, en fonction de la vitesse d'avance, d'au moins un paramètre de commande de débit en relation avec le flux d'air pulsé à délivrer,
- le pilotage du moteur de ventilateur selon le paramètre de commande de débit.

Grâce à ces dispositions, le débit d'air est avantageusement ajusté en fonction de la vitesse d'avance de l'engin agricole, avec un certain degré de proportionnalité qui sera discuté en détail plus loin. Si la délivrance du produit à délivrer est aussi réalisée en fonction de la vitesse d'avance de l'engin agricole, on peut obtenir des conditions aérauliques identiques ou très similaires même si la vitesse d'avance évolue au cours du temps, moyennant quoi ceci permet aussi de délivrer le produit de façon homogène et en quantité bien maîtrisée sur l'ensemble de la végétation cible indépendamment de la vitesse d'avance ou de l'engin agricole.

Dans un parcours en montée assez raide et avec chargement conséquent, le groupe motopropulseur de l'engin agricole peut atteindre sa limite de puissance pour mouvoir l'engin agricole, alors la baisse du régime moteur et de la vitesse d'avance est avantageusement accompagnée par une diminution simultanée du régime du ventilateur ce qui permet de récupérer une partie de la puissance consommée par le ventilateur, une telle récupération n'étant pas envisageable dans l'art connu.

On note que le produit à pulvériser peut être un produit phytosanitaire, plus généralement un produit de traitement de la végétation. On parle dans le jargon du métier de « bouillie » à pulvériser. On note que le moteur entraînant le ventilateur peut être un moteur hydraulique ou un moteur électrique.

Comme il sera discuté plus en détails plus loin, l'engin agricole peut être un tracteur enjambeur ou non. De plus l'engin agricole peut être un tracteur portant le système de pulvérisation ou bien l'engin agricole équipé du système de pulvérisation peut être une entité trainée par un tracteur.

La végétation cible peut typiquement être un vignoble ou un verger, sans que ceci constitue une limitation aux cas d'applications possibles de la présente invention.

La délivrance du produit dans le flux d'air portant peut être réalisé dans une position en aval c'est-à-dire à l'endroit où l'air pulsé sort à l'air libre par les buses d'air, ou bien il peut être réalisé dans une position un peu plus amont c'est-à-dire dans une canalisation d'air pulsé à distance de la sortie à l'air libre.

Selon une réalisation, le paramètre de commande de débit est un régime de rotation cible du ventilateur. L'asservissement du débit d'air par rapport à la vitesse d'avance de l'engin agricole se fait au moyen du régime de rotation du ventilateur, qu'il soit entraîné par un moteur hydraulique ou par un moteur électrique.

Selon une réalisation alternative, le paramètre de commande de débit peut être une ouverture d'électrovanne hydraulique, par exemple de l'électrovanne hydraulique qui alimente le moteur hydraulique entraînant le ventilateur.

Selon une réalisation, l'évaluation de la vitesse d'avance de l'engin agricole est réalisée au moyen de l'un et/ou de l'autre des moyens suivants :
- un système de géo-positionnement, de préférence un système de géo-positionnement différentiel (DGPS), avec fonction de dérivation temporelle de position,
- un système basé sur des signaux fréquentiels délivrés par un capteur en vis-à-vis d'une roue à dents, mécaniques ou magnétiques, en relation cinématique avec une roue du tracteur,
- un système à base d'un capteur radar en interaction avec le sol,
- une plateforme inertielle, comprenant au moins un capteur d'accélération longitudinale et une fonction d'intégration, avec recalage périodique.

L'un ou l'autre des moyens ci-dessus peut être utilisé pour déterminer la vitesse d'avance de l'engin agricole. Dans les circonstances où les roues ne patinent pas, le système basé sur les tops de roue dentée donne satisfaction, mais toutefois dans des circonstances où les roues motrices peuvent patiner par endroits, la détermination de la vitesse d'avance par rapport au sol sera plus exacte en utilisant un autre moyen, par exemple un système de géo-positionnement différentiel.

Selon une réalisation, la détermination du paramètre de commande de débit est faite à partir d'une table de correspondance à paliers ou d'une table de calibration à interpolation.

Cette table de correspondance ou calibration exprime le paramètre de commande de débit à appliquer en fonction notamment de la vitesse d'avance mais il peut aussi être impliqué un autre paramètre comme la distance moyenne entre le jet de produit et la végétation cible ou l'épaisseur de la végétation cible.

Moyennant quoi, la correspondance entre la vitesse d'avance et le flux d'air pulsé (créant le débit d'air portant le jet de produit) peut être paramétrée et adaptée à l'utilisation cible, que ce soit le type de produit ou le type d'engin agricole, les caractéristiques du ventilateur ou encore les caractéristiques de la pulvérisation à jet portée souhaitée. On peut ainsi utiliser un logiciel de base unique, le paramétrage permettant de customiser la fonction de pulvérisation vis-à-vis de l'application concernée.

Selon une réalisation, il est prévu en outre un pilotage d'une ou plusieurs électrovannes contrôlant la délivrance du produit à pulvériser sous pression, en fonction de la vitesse d'avance.

Il est ainsi possible d'asservir non seulement le débit d'air par rapport à la vitesse d'avance mais aussi d'asservir la quantité de produit délivré par rapport à la vitesse d'avance. On peut ainsi garantir une homogénéité des conditions aérauliques de délivrance du produit même si la vitesse de l'avance de l'engin agricole évolue au cours de son parcours dans la vigne ou le verger.

Selon une réalisation, le système de pulvérisation comprend au moins deux ventilateurs entrainés chacun par un moteur respectif, chaque moteur respectif étant piloté selon le paramètre de commande de débit.

Dans certaines configurations, la génération du flux d'air pulsé nécessite l'utilisation de plusieurs ventilateurs, par exemple un ventilateur par côté ou même un ventilateur par colonne de pulvérisation. Avantageusement selon la présente invention, la logique d'asservissement du régime de ventilateur à la vitesse d'avance s'applique à chacun des ventilateurs impliqués dans la génération du flux d'air pulsé souhaité.

Selon une réalisation, le système de pulvérisation comprend en outre un terminal utilisateur utilisable pour sélectionner une table de paramétrage parmi plusieurs et/ou pour une fonction d'affichage de la vitesse d'avance, du régime cible du ventilateur et du régime réel du ventilateur.

Grâce au terminal utilisateur, l'utilisateur peut déclencher le début d'une séquence de pulvérisation ou à l'inverse arrêter une séquence de pulvérisation. De plus, l'utilisateur peut sélectionner une table de paramétrage qui correspond au produit en cours d'application. En outre, le terminal utilisateur peut afficher en temps réel les vitesses et régimes de rotation représentatifs du processus d'application du produit en cours.

Selon un autre aspect de l'invention, celle-ci a trait à un système de pulvérisation d'un produit à pulvériser porté par un débit d'air à destination d'une végétation cible, le système de pulvérisation apte à être embarqué à bord d'un engin agricole, le système de pulvérisation comprenant au moins un ventilateur, avec un moteur de ventilateur permettant plusieurs régimes de rotation distincts, une unité de commande, et une ou plusieurs électrovannes contrôlant la délivrance d'un produit à pulvériser sous pression, le système étant configuré, grâce à l'unité de commande, pour mettre en œuvre le procédé tel que décrit ci-dessus.

Selon diverses réalisations, le système de pulvérisation peut comprendre une rampe et une pluralité de colonnes de pulvérisation en nombre N, configurées pour être placées en vis-à-vis du feuillage d'une plante ou d'un arbuste, le nombre N étant compris entre 2 et 11.

On entend ici par « colonne de pulvérisation » un sous-ensemble d'éléments de pulvérisation qui se trouvent généralement alignés selon une posture verticale en configuration d'utilisation

En configuration d'utilisation, les colonnes de pulvérisation s'étendent sensiblement en position verticale. La direction de pulvérisation de produit ainsi que du débit d'air portant s'étend sensiblement à l'horizontale.

Les colonnes de pulvérisation peuvent être, par exemple dans une configuration de vigne étroite, configurées pour dispenser du produit sur les deux côtés transverses de la colonne de pulvérisation. À l'inverse, les colonnes de pulvérisation peuvent être configurées pour dispenser du produit sur un seul côté (traitement d'un seul demi-rang).

Selon un autre aspect de l'invention, celle-ci a pour objet un ensemble comprenant un tracteur enjambeur et un système de pulvérisation tel que décrit ci-dessus, l'engin agricole étant alors formé par le tracteur enjambeur.

Ainsi, le tracteur enjambeur porte le système de pulvérisation et cet ensemble forme un équipement autonome muni généralement d'un réservoir de produit présentant un volume assez conséquent, il peut traiter une surface de vignoble ou verger importante sans avoir à ravitailler.

Alternativement, il est prévu un ensemble formé comme une remorque portant le système de pulvérisation et comprenant un réservoir de produit. Cette remorque peut être attelé à un tracteur quelconque.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en vue de dessus d'un engin agricole enjambeur évoluant dans un vignoble ou un verger, l'engin agricole étant équipé d'un système de pulvérisation porté dans lequel la présente invention peut être mise en oeuvre ;
La figure 2 est une représentation schématique en vue de face de l'engin agricole de la figure 1, illustrant en particulier la rampe de pulvérisation avec 6 colonnes de pulvérisation ;
La figure 3 juste une situation particulière où l'engin agricole évolue sur un terrain en montée ;
La figure 4 montre un synoptique schématique fonctionnel du système de pulvérisation selon un exemple de réalisation ;
La figure 5 est une représentation schématique d'un abaque de correspondance entre la vitesse d'avance et un paramètre de commande de débit, ici le régime de rotation cible du ventilateur ;
La figure 6 est une représentation schématique d'un logigramme illustrant le procédé proposé.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation de produit sous forme liquide, le produit étant destiné à être projeté sous forme de gouttelettes sur une végétation cible par exemple des feuillages d'arbuste ou des feuillages de vignoble.

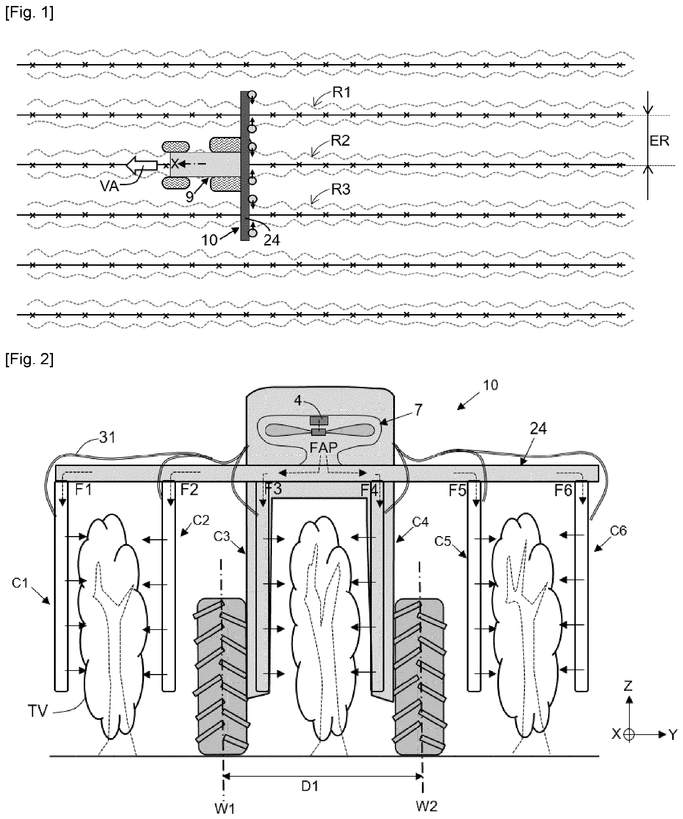

Dans l'exemple illustré aux figures 1 à 4, on a illustré le cas d'un engin agricole 9 de type tracteur enjambeur, en vue de dessus, en situation de délivrance d'un produit phytosanitaire sur trois rangs de vignes R1, R2, R3 simultanément. Les rangs de vigne sont espacés d'une distance ER. Dans des configurations très fréquentes des vignobles on peut avoir ER de l'ordre de 60 cm à 90 cm (vignes dites 'étroites'), ou ER de l'ordre de 120 cm à 160 cm (vignes dites 'larges').

On a illustré un tracteur qui enjambe un rang de vigne. Toutefois, le tracteur enjambeur pourrait enjamber deux rangs de vigne. Aussi, le tracteur pourrait être un tracteur non enjambeur. La distance D1 entre les plans médians W1,W2 des roues porteuses principales peut aller de 160 cm jusqu'à 250 cm, sans que ces valeurs ne soient limitatives. La garde au sol pour la fonction d'enjambement est adaptée au type de plantes à traiter, avec un réglage en hauteur possible le cas échéant.

L'engin agricole 9 de type tracteur enjambeur se déplace le long de son axe longitudinal X à une vitesse d'avance notée VA. La détermination de la vitesse d'avance fait l'objet d'une discussion plus loin dans le présent document.

L'engin agricole 9, de type tracteur enjambeur dans l'exemple représenté, porte un système de pulvérisation 10 d'un produit de traitement.

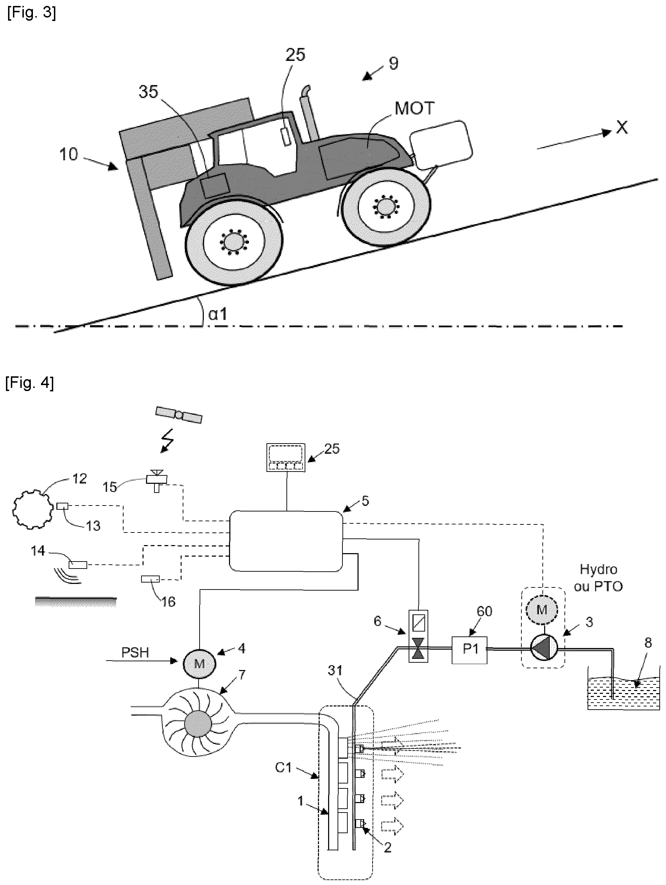

Le produit d'intérêt peut aussi être appelé produit à pulvériser (repéré 8 à la figure 4). Il peut s'agir d'un produit de traitement en général, ou plus particulièrement d'un produit phytosanitaire. Pour rappel le produit se trouve sous forme liquide, par exemple dans un réservoir embarqué sur le système de pulvérisation ou plus généralement dans un réservoir embarqué sur le tracteur ou l'engin agricole en question.

Le système de pulvérisation 10 comprend une rampe 24 s'étendant, en situation d'utilisation, généralement à l'horizontale i.e. transversalement à la direction longitudinale de déplacement du tracteur, i.e. selon l'axe transverse Y (cf figure 2).

Le système de pulvérisation 10 comprend des colonnes de pulvérisation. Dans l'exemple illustré aux figures, le système de pulvérisation 10 comprend six colonnes de pulvérisation notées C1, C2, C3, C4, C5 et C6, chaque colonne pulvérisant d'un seul côté dans cet exemple. On note N le nombre des colonnes de pulvérisation ; N est compris entre 2 et 11.

Les colonnes de pulvérisation sont destinées à être placées en vis-à-vis d'une plante/arbuste. La végétation cible TV, est constituée d'un feuillage d'arbre, ou d'un feuillage d'arbuste, ou d'un feuillage de vigne, sans que cette liste ne constitue une limitation.

Le système de pulvérisation 10 comprend au moins un ventilateur 7 entrainé par un moteur de ventilateur 4. Dans un exemple type, le moteur de ventilateur 4 est un moteur hydraulique, alimenté par la pression hydraulique PSH en provenance d'une pompe hydraulique 35 agencée dans l'engin agricole 9. La pompe hydraulique est entraînée directement ou indirectement par le moteur MOT de l'engin agricole (cf figure 3). La pompe hydraulique peut être agencée sur l'engin agricole lui-même ou bien sur le tracteur qui traîne l'engin agricole.

Avantageusement selon la présente invention, il est prévu que le moteur de ventilateur permette plusieurs régimes de rotation distincts. En d'autres termes, il ne s'agit pas d'un ventilateur que l'on pilote simplement en mode tout-ou-rien. Le moteur du ventilateur peut disposer d'une pluralité de régimes discrets, c'est à dire des paliers de régime.

Selon une autre possibilité, le moteur de ventilateur peut être commandé selon un régime quelconque entre 0 et le régime maximum possible. Ainsi, il sera possible de faire varier le régime du ventilateur en fonction de la vitesse d'avance VA de l'engin agricole notamment avec une certaine fonction de proportionnalité.

Le flux d'air pulsé est canalisé par diverses conduites depuis la zone du ventilateur 7 jusqu'aux sorties des buses de délivrance 1 dans les colonnes de pulvérisation.

Le flux d'air pulsé total noté FAP impulsé par le ventilateur 7 est divisé en plusieurs branches de flux F1,F2,F3,F4,F5,F6, ici six branches correspondant chacune à une colonne de pulvérisation. La configuration du flux d'air dépend bien entendu du nombre de colonnes de pulvérisation ainsi que du nombre de ventilateurs et de la distribution de l'air depuis les ventilateurs jusqu'aux colonnes de pulvérisation.

Dans l'exemple illustré, il y a un seul ventilateur 7. Dans d'autres exemples non représentés aux figures, il peut y avoir plusieurs ventilateurs notamment deux ventilateurs un pour chaque côté, ou autant de ventilateurs que de colonnes de pulvérisation.

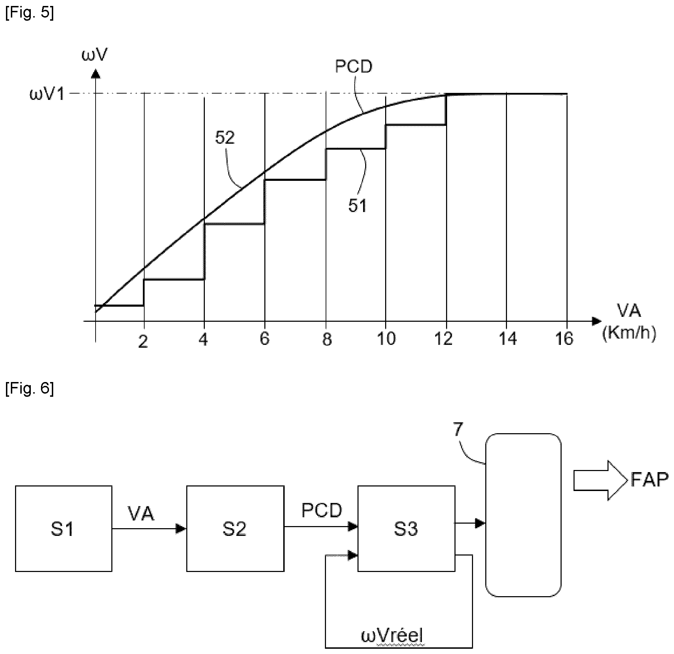

Le procédé comprend une réalisation itérative des actions suivantes, illustré symboliquement sur la figure 6 :
S1- une évaluation de la vitesse d'avance VA de l'engin agricole par rapport au sol,
S2- une détermination, en fonction de la vitesse d'avance VA, d'un paramètre de commande de débit noté PCD en relation avec le flux d'air pulsé à délivrer,
S3- le pilotage du moteur de ventilateur 4 selon le paramètre de commande de débit PCD.

Selon un exemple, le paramètre de commande de débit est un régime de rotation cible du ventilateur. La détermination du paramètre de commande de débit est faite à partir d'une table de correspondance à paliers ou d'une table de calibration à interpolation.

La figure 5 illustre un exemple de dépendance du régime de ventilateur cible en fonction de la vitesse d'avance VA de l'engin agricole. En abscisses est représenté la vitesse d'avance de 0 à 16 Km/h, et en ordonnées est représentée la vitesse ventilateur cible wV. Comme déjà indiqué, la vitesse ventilateur cible wV est un exemple particulier du cas général où c'est un paramètre de commande de débit PCD qui est rendu dépendant de la vitesse d'avance.

La courbe 51 représente une logique à paliers discrets. La courbe 52 représente une logique continue. La courbe sans palier peut être obtenue à partir de quelques points et d'une interpolation entre les points.

Dans les deux cas on observe une certaine proportionnalité entre la vitesse d'avance et le régime ventilateur cible. On peut utiliser un paramètre supplémentaire ou une deuxième dimension de la calibration, qui est relative à la distance à la végétation ou encore l'épaisseur de la végétation.

Il peut être prévu que dans le cas où la vitesse d'avance est indisponible, le régime ventilateur cible soit fixé au régime de référence wV1, qui peut être ou non le régime maximum du ventilateur.

Selon d'autres exemples, on peut avoir une progressivité différente avec une proportionnalité continue sans être nécessairement linéaire.

On a représenté sur la figure 3 la situation où l'engin agricole 9 est en situation de montée prononcée, avec un angle de montée noté α1.

Dans une telle situation, si le groupe motopropulseur de l'engin agricole atteint sa limite de puissance pour mouvoir l'engin agricole et faire tourner les accessoires, alors la baisse du régime moteur et de la vitesse d'avance est avantageusement accompagnée par une diminution simultanée du régime du ventilateur ce qui permet de récupérer une partie de la puissance consommée par le ventilateur.

A l'inverse, dans une situation en descente prononcée, le régime moteur et la vitesse d'avance peuvent augmenter, voire les roues peuvent glisser, ces phénomènes éventuels seront avantageusement accompagnés par une augmentation simultanée du régime du ventilateur pour garder des conditions aérauliques cohérentes avec l'avancement réel.

A la figure 4, la référence 1 désigne généralement le plenum avec des buses d'air de la colonne de pulvérisation. La référence 2 désigne une buse de projection du produit à pulvériser.

À propos du calcul de la vitesse et d'avance, quatre possibles solutions ont été représentées à la figure 4. Une des solutions fait appel à un comptage de signaux de roues. Plus précisément, il est prévu une cible à dents 12, magnétiques ou mécaniques, qui se déplacent en vis-à-vis d'un capteur 13 par exemple de type à effet Hall. Les signaux délivrés par le capteur sont traités par l'unité de commande 5 qui élabore à partir de ces signaux la vitesse d'avance instantanée VA du tracteur (respectivement dans le cas général de l'engin agricole).

On remarque que la cible à dents 12 et le capteur 13 en vis-à-vis peuvent être agencés sur n'importe quelle partie tournante reliée à l'avancement de l'engin agricole.

Une deuxième solution consiste à utiliser un système de géo-positionnement par satellites et en ajoutant une fonction de dérivée temporelle, on en en déduit la vitesse de déplacement de l'engin agricole. À cet effet, l'engin agricole peut être équipé d'un récepteur de géo-position noté 15. Il peut être fait appel à différents systèmes, par exemple ceux connus sous les noms de GPS, Galileo, Glonass.

Dans un exemple d'implémentation, un GPS de type différentiel dit DGPS est utilisé avec une borne GPS stationnaire placée en bout de champ qui communique avec l'équipement électronique de l'engin agricole.

Selon un autre exemple d'implémentation, l'engin agricole peut être équipé d'un capteur radar 14, connu en soi, qui émet des ondes vers le sol et récupère les réflexions avec un décalage doppler qui permet d'en déduire la vitesse d'avance du tracteur par rapport au sol indépendamment d'un éventuel glissement des roues du tracteur.

Selon un autre exemple d'implémentation, l'engin agricole peut être équipé d'un capteur lidar, connu en soi. Les nuages de points successifs captés par le capteur lidar sont traités par un logiciel qui permet de déduire la vitesse d'avance de l'engin agricole.

Selon encore un autre exemple d'implémentation, l'engin agricole peut être équipé d'une caméra vidéo. De façon similaire au cas précédent, les images successives captées par la caméra sont traitées par un logiciel qui permet de déduire la vitesse d'avance de l'engin agricole.

Selon un autre exemple d'implémentation, il peut être fait appel à une plate-forme inertielle 16 qui intègre des informations délivrées par un capteur d'accélération longitudinale, afin d'en déduire la vitesse d'avance du tracteur.

Par ailleurs, il est prévu en outre un pilotage d'une ou plusieurs électrovannes 6 contrôlant la délivrance d'un produit à pulvériser 8 sous pression.

Il est prévu de piloter d'une ou plusieurs électrovannes 6, en fonction de la vitesse d'avance. Suivant les cas de figure, il peut y avoir une seule électrovanne 6 pour l'ensemble du réseau de délivrance vers les buses de projection de produit ou plusieurs électrovannes afin de pouvoir commander sélectivement une partie du système et le cas échéant isoler une partie du système, par exemple pour réaliser les bordures ou un nombre de rangs inférieur à la situation nominale.

Une pompe 3 délivre le produit sous pression, à la pression P1. Cette pompe peut être entraînée par un moteur hydraulique ou directement par la prise de force du tracteur. Il est prévu un collecteur 60 qui dessert différents tuyaux d'acheminement 31 du produit à pulvériser vers les colonnes de pulvérisation.

Par ailleurs, le système de pulvérisation 10 comprend une unité de commande 5, en charge de déterminer la vitesse d'avance du tracteur à partir d'un des moyens exposés plus haut. L'unité de commande élabore aussi, à partir de la vitesse d'avance, un paramètre de commande de débit PCD. L'unité de commande 5 pilote à la suite un organe chargé de mettre en œuvre le paramètre de commande de débit. Dans l'exemple illustré, il s'agit directement du régime de rotation du ventilateur. Dans un autre exemple, il peut s'agir du taux d'ouverture d'une vanne hydraulique qui alimente le moteur hydraulique couplé mécaniquement a la roue à pales du ventilateur.

Le pilotage du régime ventilateur peut faire appel à un asservissement en boucle fermée grâce à un capteur placé sur l'arbre rotor qui mesure la vitesse de rotation wVréel (cf figure 6).

Optionnellement, il est prévu en outre un terminal utilisateur 25. Grâce à ce terminal utilisateur, l'utilisateur peut déclencher le début d'une séquence de pulvérisation ou à l'inverse arrêter une séquence de pulvérisation. Le terminal utilisateur est typiquement installé dans l'environnement immédiat du poste de conduite du tracteur. Le terminal utilisateur est relié à l'unité de commande 5 par une connexion électrique de type bus. Le terminal utilisateur peut être un terminal de type IsoBus.

De plus, le terminal utilisateur est utilisable pour sélectionner une table de paramétrage parmi plusieurs tables de paramétrage. De plus, le terminal utilisateur 25 est utilisable pour réaliser une fonction d'affichage de la vitesse d'avance, du régime cible du ventilateur et du régime réel du ventilateur.

On note que l'avantage procuré par l'asservissement de la vitesse du ventilateur à la vitesse d'avance n'est pas cantonné aux situations de montée ou de descente. Il peut être nécessaire de traiter certaines parties de la parcelle/vignoble/verger à une vitesse plus basse que la vitesse nominale, par exemple pour diminuer les nuisances sonores générées par le flux d'air pulsé. La fonction ne plus virilisation on peut aussi comporter un mode dit d'économie, avec une vitesse prescrite du tracteur plus basse que dans le mode nominal.

En alternative à la configuration représentée aux figures et discutée ci-dessus, le système de pulvérisation peut être embarqué à bord d'un engin agricole de type remorque.

Dans ce cas, la remorque est couplée mécaniquement à un tracteur. De plus la remorque est couplée hydrauliquement au tracteur pour bénéficier de la fourniture d'huile sous pression depuis la pompe hydraulique présente à bord du tracteur. Dans une configuration alternative ou complémentaire, la remorque équipée du système de pulvérisation peut elle-même comprendre une pompe hydraulique entraînée par exemple par un arbre à joint cardan relié à la prise de force du tracteur.

On remarque que la prise de force du tracteur tourne généralement à une vitesse proportionnelle à la vitesse du moteur MOT du tracteur, et n'est pas reliée à la vitesse d'avance. Dans tous les cas, le régime de rotation de la prise de force ne tient pas compte d'un éventuellement glissement ou patinage des roues.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. Procédé mis en œuvre dans un engin agricole enjambeur (9) apte à enjamber un rang de vigne, l'engin agricole enjambeur comprenant un groupe motopropulseur (MOT) ayant une limite de puissance, un système de pulvérisation (10) d'un produit à pulvériser (8) porté par un débit d'air à destination d'une végétation cible (TV) comprenant au moins un ventilateur (7) entrainé par un moteur de ventilateur (4), le moteur de ventilateur étant un moteur hydraulique alimenté par une pompe hydraulique entraînée directement ou indirectement par le groupe motopropulseur de l'engin agricole enjambeur, une unité de commande (5) configurée pour au moins piloter un régime de rotation du moteur de ventilateur, et un moyen d'évaluation de la vitesse d'avance de l'engin agricole enjambeur (9), le procédé comprenant :
a- avancée de l'engon agricole enjambeur sur un parcours en montée,
b- atteinte de la limite de puissance du groupe motopropulseur,
c- baisse simultanée du régime moteur et de la vitesse d'avance,
d- pilotage par l'unité de commande (5) d'une diminution du régime de rotation du ventilateur, en fonction de la vitesse d'avance délivrée par le moyen d'évaluation de la vitesse d'avance,
e- récupération par le groupe motopropulseur d'une partie de la puissance consommée par le ventilateur.

2. Procédé selon la revendication 1, dans lequel à l'étape d-, la diminution du régime de rotation du ventilateur est déterminée à partir d'une table de correspondance à paliers.

3. Procédé selon la revendication 1, dans lequel à l'étape d-, la diminution du régime de rotation du ventilateur est déterminée à partir d'une table de calibration à interpolation

4. Procédé selon l'une des revendications 1 à 3, dans lequel le système de pulvérisation comprend en outre une ou plusieurs électrovannes (6) contrôlant la délivrance du produit à pulvériser sous pression, dans lequel le procédé prévoit en outre un pilotage des électrovannes en fonction de la vitesse d'avance (VA).

5. Procédé selon l'une des revendications 1 à 4, dans lequel le système de pulvérisation comprend en outre un terminal utilisateur (25) et le procédé prévoit de sélectionner une table de paramétrage parmi plusieurs et/ou pour une fonction d'affichage de la vitesse d'avance, du régime cible du moteur du ventilateur et du régime réel du moteur du ventilateur.

6. Engin agricole enjambeur (9) apte à enjamber un rang de vigne, comprenant :
- un groupe motopropulseur (MOT) ayant une limite de puissance,
- un système de pulvérisation (10) d'un produit à pulvériser (8) porté par un débit d'air à destination d'une végétation cible (TV) comprenant au moins un ventilateur (7) entrainé par un moteur de ventilateur (4), le moteur de ventilateur étant un moteur hydraulique alimenté par une pompe hydraulique entraînée directement ou indirectement par le groupe motopropulseur de l'engin agricole enjambeur,
- une unité de commande (5) configurée pour au moins piloter un régime de rotation du moteur de ventilateur,
- un moyen d'évaluation de la vitesse d'avance de l'engin agricole enjambeur (9), l'unité de commande (5) étant configurée pour piloter un régime de rotation du moteur de ventilateur au moins en fonction d'une évaluation de la vitesse d'avance (VA) de l'engin agricole enjambeur par rapport au sol, et configurée pour piloter une diminution du régime de rotation du moteur de ventilateur en cas d'atteinte de la limite de puissance,
de sorte que lorsque l'engin agricole enjambeur avance sur un parcours en montée, si le groupe motopropulseur (MOT) atteint sa limite de puissance qui occasionne une baisse simultanée de régime et de vitesse d'avance, ladite baisse de régime est accompagnée par un pilotage d'une diminution du régime de rotation du ventilateur ce qui permet au groupe motopropulseur de récupérer une partie de la puissance consommée par le ventilateur.

7. Engin agricole enjambeur selon la revendication 6, dans lequel le moyen d'évaluation de la vitesse d'avance de l'engin agricole enjambeur est l'un et/ou de l'autre des moyens suivants :
- un système de géo-positionnement, de préférence un système de géo-positionnement différentiel (DGPS), avec fonction de dérivation temporelle de position,
- un système basé sur des signaux fréquentiels délivrés par un capteur (13) en vis-à-vis d'une roue (12) à dents, mécaniques ou magnétiques, en relation cinématique avec une roue de l'engin agricole enjambeur,
- un système à base d'un capteur radar (14) en interaction avec le sol,
- une plateforme inertielle (16), comprenant au moins un capteur d'accélération longitudinale et une fonction d'intégration, avec recalage périodique.

8. Engin agricole enjambeur selon l'une des revendications 6 à 7, dans lequel le système de pulvérisation comprend en outre un terminal utilisateur (25) utilisable pour sélectionner une table de paramétrage parmi plusieurs et/ou pour une fonction d'affichage de la vitesse d'avance, du régime cible du ventilateur et du régime réel du ventilateur.

9. Engin agricole enjambeur selon l'une des revendications 6 à 8, dans lequel le système de pulvérisation comprend en outre une ou plusieurs électrovannes (6) contrôlant la délivrance du produit à pulvériser sous pression, dans lequel il est prévu en outre un pilotage des électrovannes en fonction de la vitesse d'avance (VA).

10. Engin agricole enjambeur selon l'une des revendications 6 à 9, dans lequel le système de pulvérisation comprend une rampe (24) et une pluralité de colonnes de pulvérisation (C1,C2,C3) en nombre N, configurées pour être placées en vis-à-vis d'une plante/arbuste, le nombre N étant compris entre 2 et 11.
